# EUROPEAN PATENT SPECIFICATION

(11) **EP 4 223 809 B1**
(45) Date of publication and mention of the grant of the patent: **06.05.2026**
(21) Application number: 22305134.3
(22) Date of filing: 08.02.2022
(51) Int. Cl.: C08F 265/06, H01B 3/44, C08J 3/12, C08K 3/36

(54) **USE OF A (METH)ACRYLIC COMPOSITION FOR MANUFACTURING A DIELECTRIC MATERIAL AND ASSOCIATED MANUFACTURING METHOD**
VERWENDUNG EINER (METH) ACRYLZUSAMMENSETZUNG ZUR HERSTELLUNG EINES DIELEKTRISCHEN MATERIALS UND ZUGEHÖRIGES HERSTELLUNGSVERFAHREN
UTILISATION D'UNE COMPOSITION (MÉTH)ACRYLIQUE POUR LA FABRICATION D'UN MATÉRIAU DIÉLECTRIQUE ET PROCÉDÉ DE FABRICATION ASSOCIÉ

(43) Date of publication of application: 09.08.2023
(73) Proprietor: Schneider Electric Industries SAS, 92500 Rueil-Malmaison (FR)
(72) Inventor: HASSANZADEH, Mehrdad, 34830 Clapiers (FR); HELAL, Karim, 38000 Grenoble (FR); ENSENLAZ, Leo, 38000 Grenoble (FR)
(74) Representative: Santarelli

(56) References cited:
- EP-A1- 3 587 461
- WO-A1-2016/177662
- WO-A1-2020/002842

## Description

### TECHNICAL FIELD

The present invention relates to the use of a particular (meth)acrylic composition for manufacturing a dielectric material and to an associated method for manufacturing a dielectric material, the dielectric material having particularly good dielectric and mechanical properties, particularly long-term behavior under specific mission profile.

It is specified that, in the remainder of this patent application, the expression "dielectric material" is taken to mean a material in which electric current does not flow freely. The atoms of the material have tightly bound electrons which cannot readily move.

Such a dielectric material can be used in the electrical industry, whether low, medium or high voltage, or in the electronics industry.

### PRIOR ART

In the electrical and electronic industry, electrically insulating materials, more commonly known as dielectric materials, are typically obtained from curable resins which, after polymerization, form a stable, infusible, three-dimensional network.

Among the curable resins, the so-called "epoxy resins" are widely used, as they allow obtaining cured materials with good mechanical and dielectric properties.

Epoxy resins are obtained from compositions which comprise at least one precursor of this epoxy resin and a cross-linking agent, such as acid anhydrides.

However, some acid anhydrides being classified by the European Chemicals Agency as substances of very high concern (SVHC), they could be subjected to an authorization procedure with before being used.

There is therefore a clear need to find an alternative to curable resin compositions that use acid anhydrides as cross-linking agents.

Such an alternative is namely taught in document EP 3 587 461 B2, referenced [1] hereinafter in the present description, which discloses the use of a particular (meth)acrylic composition for manufacturing of a dielectric material.

This particular (meth)acrylic composition comprises:
(a) 100 parts by weight of a liquid (meth)acrylic syrup comprising:
   (a₁) from 10 % by weight to 50 % by weight of one or more (meth)acrylic polymers P1, and
   (a₂) from 50 % by weight to 90 % by weight of one or more (meth)acrylic monomers M1, each monomer M1 comprising only one (meth)acrylic function per monomer,
(b) from 100 parts by weight to 200 parts by weight of a mineral filler C, said mineral filler C comprising at least one filler C1 chosen from the group consisting of metal oxides, carbonates, silicates and glass, preferably chosen from metal oxides,
(c) from 0,01 part by weight to 5 parts by weight of one (meth)acrylic monomer M2 comprising at least two (meth)acrylic functions per monomer,
(d) from 0,01 part by weight to 10 parts by weight of a (meth)acrylic monomer M3, the monomer M3 being:
   . either a (meth)acrylic monomer M3₁ comprising only one (meth)acrylic function per monomer, the monomer M3₁ being different from the monomer(s) M1,
   . or a (meth)acrylic monomer M3₂ comprising at least two (meth)acrylic functions per monomer, the monomer M3₂ being different from the monomer M2,
e) from 0,01 part by weight to 5 parts by weight of a polymerization initiator chosen from organic peroxides, and
(f) optionally, a coupling agent.

However, the dielectric material manufactured by using the (meth)acrylic composition of document [1] presents some drawbacks, namely in terms of thermal resistance, the minimum thermal class A according to standard IEC 60085 being not always reached. In addition, some difficulties are encountered when manufacturing the dielectric material from this (meth)acrylic composition, one of which being a limited pot life at room temperature (about 20 °C to 25 °C), *i.e.* a limited working time after mixing of the different components forming the (meth)acrylic composition for its subsequent transformation, namely by molding.

The aim of the present invention is therefore to propose a new (meth)acrylic composition which can be used for manufacturing a dielectric material, which is provided with high mechanical and dielectric properties over time and at temperatures at which the dielectric material is used, particularly at permanent operating temperatures up to 105 °C during 40 years.

### SUMMARY OF THE INVENTION

The aim mentioned above is achieved, firstly, by using a particular (meth)acrylic composition for manufacturing a dielectric material.

According to the present invention, this particular (meth)acrylic composition comprises:
(a) 100 parts by weight of a liquid (meth)acrylic syrup comprising:
   (a₁) from 10 % by weight to 50 % by weight of one or more (meth)acrylic polymers P1, and
   (a₂) from 50 % by weight to 90 % by weight of one or more (meth)acrylic monomers M1, each monomer M1 comprising only one (meth)acrylic function per monomer and being different from methacrylic acid,
(b) from 0,01 part by weight to 10 parts by weight of one (meth)acrylic monomer M2 comprising at least two (meth)acrylic functions per monomer,
(c) from 0,01 part by weight to 10 parts by weight of methacrylic acid,
(d) from 0,01 part by weight to 5 parts by weight of a polymerization initiator chosen from organic peroxides, and
(e) from 100 parts by weight to 400 parts by weight of a mineral filler C, said mineral filler C comprising at least one filler C1 chosen from the group consisting of metal oxides, carbonates, silicates and glass.

As will be seen in the examples hereafter, the dielectric material manufactured from this particular (meth)acrylic composition, the use of which is the subject of the present invention, has mechanical and dielectric properties, which are higher and maintained over time compared to those of a dielectric material manufactured from the (meth)acrylic composition taught in document [1] and, at the same time, comparable to, or even superior to, those of epoxy-based dielectric materials available to date.

The particular (meth)acrylic composition whose use is the subject of the present invention and from which the dielectric material is manufactured comprises, in specific weight proportions, a liquid (meth)acrylic syrup, (meth)acrylic monomer(s) M2, methacrylic acid, a polymerization initiator and a mineral filler C.

More particularly, the liquid (meth)acrylic syrup comprises:
(a₁) from 10 % by weight to 50 % by weight of one or more (meth)acrylic polymers P1, and
(a₂) from 50 % by weight to 90 % by weight of one or more (meth)acrylic monomers M1, each monomer M1 comprising only one (meth)acrylic function per monomer and being different from methacrylic acid.

The expression "(meth)acrylic monomer" covers both an acrylic monomer and a methacrylic monomer. Similarly, the expression "(meth)acrylic polymer" covers not only an acrylic homopolymer but also a methacrylic homopolymer, an acrylic copolymer and a methacrylic copolymer.

It is moreover pointed out that the expression "from ... to ... " which has just been mentioned and which is used in the present patent application should be understood as defining not only the values of the range, but also the values of the limits of that range.

The liquid (meth)acrylic syrup of the (meth)acrylic composition may comprise only one (meth)acrylic polymer P1, but may equally comprise a mixture of two, three or even more (meth)acrylic polymers P1.

Each (meth)acrylic polymer P1 included in the liquid (meth)acrylic syrup may in particular be chosen from:
- polyalkyl acrylates which comprise alkyl acrylate homopolymers and alkyl acrylate copolymers, and
- polyalkyl methacrylates which comprise alkyl methacrylate homopolymers and alkyl methacrylate copolymers.

According to an advantageous embodiment, each (meth)acrylic polymer P1 is a polymethyl methacrylate (PMMA), it being understood that, as indicated above, the polymethyl methacrylate (PMMA) may denote a methyl methacrylate (MMA) homopolymer or an MMA copolymer. In other words, in this preferred embodiment, each (meth)acrylic polymer P1 is chosen from an MMA homopolymer and an MMA copolymer.

In particular, in the case where the liquid (meth)acrylic syrup comprises a mixture of two or more polymethyl methacrylates P1, this mixture may be formed by mixing at least two MMA homopolymers having a different molecular weight, by mixing at least two MMA copolymers having an identical monomer composition and a different molecular weight, by mixing at least two MMA copolymers having a different monomer composition or by mixing at least one MMA homopolymer and at least one MMA copolymer.

According to one preferred embodiment of the invention, MMA represents at least 50 % by weight of each (meth)acrylic polymer P1.

According to a particular embodiment, each (meth)acrylic polymer P1 comprises at least 70 %, advantageously at least 80 %, preferentially at least 90 % and more preferentially at least 95 % by weight of methyl methacrylate.

When each (meth)acrylic polymer P1 is a MMA copolymer, it may comprise at least one comonomer containing at least one ethylenic unsaturation and being capable of copolymerizing with MMA. Among these comonomers, mention may notably be made of acrylic acid and alkyl (meth)acrylates in which the alkyl group contains from 1 to 12 carbon atoms. As examples of comonomers, mention may be made of methyl acrylate and ethyl, butyl or 2-ethylhexyl (meth)acrylate.

Advantageously, each (meth)acrylic polymer P1 is a copolymer of MMA and of an alkyl acrylate in which the alkyl group contains from 1 to 12 carbon atoms, advantageously from 1 to 6 carbon atoms and preferentially from 1 to 4 carbon atoms.

According to an advantageous embodiment, when each (meth)acrylic polymer P1 is a MMA copolymer, this MMA copolymer comprises from 70 % to 99,9 %, advantageously from 80 % to 99,8 %, preferentially from 90 % to 99, 8% and more preferentially from 90% to 99,7 % by weight of MMA and from 0,1 % to 30%, advantageously from 0,2 % to 20%, preferentially from 0,2 % to 10% and more preferentially from 0,3 % to 10 % by weight of at least one comonomer containing at least one ethylenic unsaturation that can copolymerize with MMA.

According to one embodiment, each (meth)acrylic polymer P1 is a copolymer of MMA and of alkyl acrylate, this copolymer being preferentially chosen from a copolymer of MMA and of methyl acrylate and a copolymer of MMA and of ethyl acrylate.

The weight-average molecular weight, noted as M_{w}, of each (meth)acrylic polymer P1 is generally high and may consequently be greater than 50000 g/mol and preferentially greater than 100000 g/mol. The weight-average molecular weight may be measured by size exclusion chromatography (SEC).

The liquid (meth)acrylic syrup of the (meth)acrylic composition may comprise only one (meth)acrylic polymer P1, but may equally comprise a mixture of two, three or even more (meth)acrylic polymers P1.

The liquid (meth)acrylic syrup of the (meth)acrylic composition may comprise only one (meth)acrylic monomer M1, but may equally comprise a mixture of two, three or even more (meth)acrylic monomers M1.

Whether the liquid (meth)acrylic syrup comprises one or more (meth)acrylic monomers M1, each (meth)acrylic monomer M1 comprises only one (meth)acrylic function per monomer and is different from methacrylic acid.

Each (meth)acrylic monomer M1 may be chosen from alkyl acrylic monomers, alkyl methacrylic monomers, hydroxyalkyl acrylic monomers and hydroxyalkyl methacrylic monomers. By alkyl, or hydroxyalkyl, (meth)acrylic monomer is meant that the monomer is an alkyl ester, or hydroxyalkyl ester, of (meth)acrylic acid.

The alkyl or hydroxyalkyl group of these (meth)acrylic monomers may be linear, branched or cyclic and containing from 1 to 22 carbon atoms, advantageously from 1 to 12 and preferentially from 1 to 6 carbon atoms.

In particular, each (meth)acrylic monomer M1 may be chosen from the methacrylates and acrylates mentioned in paragraph [0032] of US 2006/251906 A1, referenced as [2].

Advantageously, the (meth)acrylic monomer (M1) is chosen from methyl methacrylate, ethyl methacrylate, methyl acrylate, ethyl acrylate, n-butyl methacrylate, n-butyl acrylate, isobutyl methacrylate, isobutyl acrylate, cyclohexyl methacrylate, cyclohexyl acrylate, isobornyl methacrylate, isobornyl acrylate, hydroxyethyl methacrylate and hydroxyethyl acrylate.

Preferably, the (meth)acrylic monomer M1 is methyl methacrylate.

Thus, when the (meth)acrylic syrup comprises one (meth)acrylic monomer M1, this monomer M1 is methyl methacrylate (MMA). When the (meth)acrylic syrup comprises two or more than two (meth)acrylic monomers M1, MMA is, among the (meth)acrylic monomers M1, the (meth)acrylic monomer M1 which is in the major weight proportion.

According to one embodiment of the invention, MMA represents at least 50 % by weight, advantageously at least 60 % by weight, more advantageously at least 70 % by weight, preferentially at least 80 % by weight and more preferentially at least 90 % by weight of the (meth)acrylic monomers M1.

The liquid (meth)acrylic syrup comprises from 10 % by weight to 50 % by weight of the (meth)acrylic polymer(s) P1 and from 50 % by weight to 90 % by weight of the (meth)acrylic monomer(s) M1.

In an embodiment of the invention, the liquid (meth)acrylic syrup comprises:
(a₁) from 10 % by weight to 40 % by weight and preferentially from 10 % by weight to 30 % by weight of the (meth)acrylic polymer(s) P1, and
(a₂) from 60 % by weight to 90 % by weight and preferentially from 70 % by weight to 90 % by weight of the (meth)acrylic monomer(s) M1.

In an advantageous embodiment, each (meth)acrylic polymer P1 and each (meth)acrylic monomer M1 of the liquid (meth)acrylic syrup comprise at least one same (meth)acrylic unit, such an embodiment making it possible to optimize the solubility of the (meth)acrylic polymer(s) P1 in the (meth)acrylic monomer(s) M1.

In an advantageous embodiment, the liquid (meth)acrylic syrup comprises one (meth)acrylic polymer P1, rather than a mixture of (meth)acrylic polymers P1.

In an advantageous embodiment, the liquid (meth)acrylic syrup comprises one (meth)acrylic monomer M1, rather than a mixture of (meth)acrylic monomers M1.

More preferentially, the liquid (meth)acrylic syrup of the (meth)acrylic composition comprises:
(a₁) a copolymer of methyl methacrylate and of methyl acrylate or a copolymer of methyl methacrylate and of ethyl acrylate as (meth)acrylic polymer P1, and
(a₂) methyl methacrylate as (meth)acrylic monomer M1.

In an advantageous embodiment, the liquid (meth)acrylic syrup has a dynamic viscosity, measured at 25 °C by a rheometer or viscometer, ranging from 10 mPa.s to 10000 mPa.s.

In a more advantageous embodiment, the liquid (meth)acrylic syrup has a dynamic viscosity, at 25 °C, ranging from 20 mPa.s to 7000 mPa.s and preferably from 20 mPa.s to 5000 mPa.s.

The liquid (meth)acrylic syrup may also comprise oligomers with (meth)acrylate functionality and/or stabilizers.

The oligomers with (meth)acrylate functionality may notably be epoxy-(meth)acrylates, urethane-(meth)acrylates or polyester-(meth)acrylates. These oligomers may be present, in the liquid (meth)acrylic syrup, in a proportion of not more than 5 parts by weight, advantageously not more than 3 parts by weight and preferentially not more than 1 part by weight, per 100 parts by weight of the (meth)acrylic polymer(s) P1 and of the (meth)acrylic monomer(s) P1.

Stabilizers, or reaction inhibitors, may also be present in the liquid (meth)acrylic syrup to prevent spontaneous polymerization of the (meth)acrylic monomer(s) M1.

These stabilizers may notably be chosen from hydroquinone (HQ), hydroquinone monomethyl ether (HQME), 2,6-di-tert-butyl-4-methylphenol (BHT), 2,6-di-tert-butyl-4-methoxyphenol (Topanol O) and 2,4-dimethyl-6-tert-butylphenol (Topanol A).

These stabilizers may be present, in the liquid (meth)acrylic syrup, in a proportion of not more than 5 parts by weight, advantageously not more than 4 parts by weight and preferentially in a proportion of between 0,3 and 3 parts by weight, per 100 parts by weight of the (meth)acrylic polymer(s) P1 and of the (meth)acrylic monomer(s) M1.

The (meth)acrylic composition whose use is the subject of the present invention also comprises one (meth)acrylic monomer M2.

The (meth)acrylic monomer M2, which can polymerize with the (meth)acrylic monomer(s) M1, is a compound which comprises at least two (meth)acrylic functions per monomer.

When it comprises two (meth)acrylic functions per monomer, this (meth)acrylic monomer M2 may be chosen from the dimethacrylates and diacrylates mentioned in paragraph [0033] of document [2].

When it comprises three (meth)acrylic functions per monomer, this (meth)acrylic monomer M2 may be chosen from the trimethacrylates and triacrylates mentioned in paragraph [0034] of document [2].

When it comprises four or more than four (meth)acrylic functions per monomer, this (meth)acrylic monomer M2 may be chosen from the tetraacrylates and pentaacrylates mentioned in paragraph [0035] of document [2].

In an advantageous embodiment of the invention, the (meth)acrylic monomer M2 is chosen from the group consisting of ethylene glycol dimethacrylate, neopentyl glycol dimethacrylate, neopentyl glycol diacrylate, 1,4-butanediol dimethacrylate, 1,4-butanediol diacrylate, 1,3-butylene glycol dimethacrylate, 1,3-butylene glycol diacrylate, triethylene glycol dimethacrylate, triethylene glycol diacrylate, ethoxylated bisphenol A dimethacrylate and ethoxylated bisphenol A diacrylate.

In a preferred embodiment of the invention, the (meth)acrylic monomer M2 is ethoxylated bisphenol A dimethacrylate or ethoxylated bisphenol A diacrylate.

The (meth)acrylic composition comprises from 0,01 part by weight to 10 parts by weight of (meth)acrylic monomer M2.

According to a particular embodiment, the (meth)acrylic composition comprises from 0,1 part by weight to 9 parts by weight, advantageously from 0,2 part by weight to 8 parts by weight, more advantageously from 0,3 part by weight to 7 parts by weight, even more advantageously from 0,4 part by weight to 6 parts by weight and even more advantageously from 1 part by weight to 5 parts by weight of (meth)acrylic monomer M2.

The (meth)acrylic composition whose use is the subject of the present invention also comprises from 0,01 part by weight to 10 parts by weight of methacrylic acid.

According to a particular embodiment, the (meth)acrylic composition comprises from 0,1 part by weight to 8 parts by weight and advantageously 0,5 part by weight to 6 parts by weight of methacrylic acid.

According to the invention, the ranges of amounts of the components (a) to (c) in the (meth)acrylic composition can be combined in any combination, for example preferred ranges for (meth)acrylic monomer M2 (b) with advantageous ranges of methacrylic acid (c).

The (meth)acrylic composition whose use is the subject of the present invention further comprises from 0,01 part by weight to 5 parts by weight of a polymerization initiator, the function of which is to ensure the start of polymerization of the (meth)acrylic monomers M1, M2 and methacrylic acid.

The polymerization initiator is chosen from organic peroxides and, advantageously, from organic peroxides that are liquid at least in the temperature range extending from 0 °C to 50 °C.

In an advantageous embodiment of the invention, the polymerization initiator is chosen from the group consisting of *tert*-amylperoxy-1-methoxycyclohexane, 1-methoxy-1-*tert*-butylperoxycyclohexane, 1-methoxy-1-*tert*-amylperoxy-3,3,5-trimethylcyclohexane, 1-methoxy-1-tert-butylperoxy-3,3,5-trimethylcyclohexane, 1-ethoxy-1-tert-amylperoxycyclohexane, 1-ethoxy-1-*tert*-butylperoxycyclohexane and 1-ethoxy-1-tert-butyl-3,3,5-peroxycyclohexane.

According to a particular embodiment, the (meth)acrylic composition comprises from 0,02 part by weight to 4 parts by weight and advantageously 0,03 part by weight to 3 parts by weight of polymerization initiator.

According to a particular embodiment, the (meth)acrylic composition comprises no polymerization activator.

The (meth)acrylic composition whose use is the subject of the present invention further comprises from 100 parts by weight to 400 parts by weight a mineral filler C.

The mineral filler C comprises at least one filler C1 that is chosen from the group consisting of metal oxides, carbonates, silicates and glass.

According to a particular embodiment, the filler C1 is in powder form.

Such a powder may be formed, for example, from particles, of which at least 50 % by number have a mean particle size, noted as D₅₀, of less than or equal to 50 µm, advantageously less than or equal to 20 µm and preferentially less than or equal to 5 µm.

When the filler C1 is chosen from carbonates, this or these carbonates may be chosen from calcium carbonate (chalk), magnesium carbonate, sodium carbonate and potassium carbonate.

When the filler C1 is chosen from silicates, this or these silicates may be chosen from calcium silicate such as wollastonite CaSiO₃, sodium silicate, potassium silicate and magnesium silicate.

In a preferred embodiment, the filler C1 is chosen from metal oxides. This or these metal oxides may be chosen from alumina Al₂O₃, which may or may not be hydrated, barium oxide BaO, silica SiO₂, magnesium oxide MgO and calcium oxide CaO.

According to a preferred embodiment, the metal oxide is silica SiO₂. This silica may notably be a ground crystalline silica or an amorphous silica.

In one embodiment of the invention, the mineral filler C may also further comprise aluminum trihydrate Al(OH)₃, also known as ATH and noted as C2, and/or reinforcements, noted as C3.

The presence of aluminum trihydrate C2 makes it possible in particular to improve the tracking resistance of the dielectric material.

According to a particular embodiment, the aluminum trihydrate C2 is in the form of particles, of which at least 50% by number have a mean particle size, noted as D₅₀, of less than or equal to 50 µm, advantageously less than or equal to 20 µm and preferentially less than or equal to 5 µm.

The reinforcements C3 may notably be in the form of fabrics, fibers or beads. These fibers may be natural or synthetic, and short or long.

In an advantageous embodiment of the invention, the reinforcements C3 may be chosen from glass fabrics, glass fibers and glass beads.

According to a particular embodiment, the (meth)acrylic composition comprises from 120 parts by weight to 300 parts by weight and advantageously from 140 parts by weight to 200 parts by weight of mineral filler C.

In an advantageous embodiment, the (meth)acrylic composition has a dynamic viscosity, measured at 25 °C by a rheometer or viscometer, higher than 10 mPa.s and, advantageously higher than 100 mPa.s. In such an embodiment, the (meth)acrylic composition is not too reactive and has a working time (or "pot life") after mixing with peroxide of at least 8 hours, preferably of at least 24 hours, for its subsequent transformation, notably for its transfer for the purpose of transformation by molding.

In a more advantageous embodiment, the (meth)acrylic composition has a dynamic viscosity, at 25 °C, ranging from 1000 mPa.s to 30 Pa.s.

According to an advantageous embodiment, the (meth)acrylic composition whose use is the subject of the present invention may also comprise a coupling agent which improves adhesion of the mineral filler C in the liquid (meth)acrylic syrup formed by the (meth)acrylic polymer(s) P1 and the (meth)acrylic monomer(s) M1.

This coupling agent may be formed by the mineral filler C and/or by a compound *per se.* The coupling agent may be formed by only one of the components that have just been mentioned or by a mixture of two or more of these components.

In the case where it is formed by the mineral filler C, this coupling agent is preferably formed by the filler C1 that is then functionalized. Such a functionalization can be provided by an aminosilane group, a vinylsilane group or a methacrylsilane group and, preferentially, by a methacrylsilane group.

According to an advantageous embodiment, when the filler C1 is formed by a silica as metal oxide, the coupling agent may be formed by a methacrylsilanized silica such as the product sold by the company Quarzwerke under the name Silbond^{®}W 12 MST.

In the case where it is formed by a compound *per se,* this coupling agent may be a compound comprising functional groups such as an organosilane. This coupling agent may notably be chosen from aminosilanes, vinylsilanes, methacrylsilanes and mixtures thereof. Preferably, the coupling agent is chosen from methacrylsilanes.

In an advantageous embodiment of the present invention, the (meth)acrylic composition further comprises a release agent, the function of which is to promote the demolding of the dielectric material obtained after polymerization.

If present, the (meth)acrylic composition comprises less than 1 part by weight, advantageously from 0,1 part by weight to 0,8 part by weight and preferentially from 0,3 part by weight to 0,6 part by weight of a release agent.

The amount of less than 1 part by weight is a key feature for maintaining a long-term thermal stability of the dielectric material obtained from the (meth)acrylic composition whose use is the subject of the present invention.

The release agent may be chosen from natural oils such as the product sold by the company BYK under the name BYK-P 9912.

According to an particular embodiment, the (meth)acrylic composition whose use is the subject of the present invention may also further comprise one or more additives such as, for example, a chain-limiting agent, a chain-transfer agent (for example dimethyldioxirane), an agent for adjusting the rate of polymerization of the (meth)acrylic monomer(s) M1, an antioxidant, a light stabilizer, a thermal stabilizing agent, a flame retardant, a dispersing agent, a colorant and/or a pigment.

The invention secondly relates to a method for manufacturing a dielectric material.

According to the present invention, this manufacturing method comprises the steps of:
(1) preparing a (meth)acrylic composition by mixing the following components:
   (a) 100 parts by weight of a liquid (meth)acrylic syrup comprising:
      (a₁) from 10 % by weight to 50 % by weight of one or more (meth)acrylic polymers P1, and
      (a₂) from 50 % by weight to 90 % by weight of one or more (meth)acrylic monomers M1, each monomer M1 comprising only one (meth)acrylic function per monomer and being different from methacrylic acid,
   (b) from 0,01 part by weight to 10 parts by weight of one (meth)acrylic monomer M2 comprising at least two (meth)acrylic functions per monomer,
   (c) from 0,01 part by weight to 10 parts by weight of methacrylic acid,
   (d) from 0,01 part by weight to 5 parts by weight of a polymerization initiator chosen from organic peroxides,
   (e) from 100 parts by weight to 400 parts by weight of a mineral filler C, said mineral filler C comprising at least one filler C1 chosen from the group consisting of metal oxides, carbonates, silicates and glass, preferably chosen from metal oxides, and
   (f) optionally, less than 1 part by weight of a release agent,
   wherein the liquid (meth)acrylic syrup (a) is prepared first and the polymerization initiator (d) is introduced in the liquid (meth)acrylic syrup (a) after the (meth)acrylic monomer M2 (b) and methacrylic acid (c) and before the mineral filler C (e) and, if present, the release agent (f), and
(2) hot-molding the (meth)acrylic composition obtained at the end of step (1), the hot-molding step (2) being advantageously performed by injection, by automatic pressure gelation process (APG), by casting under vacuum or at atmospheric pressure, whereby the dielectric material is obtained.

The manufacturing process according to the invention is therefore a process that is particularly simple to implement and that does not necessarily require an additional post-cure step, unlike current processes for manufacturing epoxy resin-based dielectric materials. The process can, moreover, be easily implemented in the facilities dedicated to these current manufacturing processes.

The features described above in connection with the (meth)acrylic composition and, in particular, the features relating to the (meth)acrylic polymer(s) P1 and the (meth)acrylic monomer(s) M1 forming the (meth)acrylic syrup, the (meth)acrylic monomer M2, the methacrylic acid, the polymerization initiator, the mineral filler C, and, if appropriate, the coupling agent and/or the additives are, of course, applicable to the present process for producing the dielectric material.

The preparing step (1) of the manufacturing process is carried out by mixing the components entering into the (meth)acrylic composition, taking care to prepare, first of all, the liquid (meth)acrylic syrup and then to introduce, into this (meth)acrylic syrup, the (meth)acrylic monomer M2 (b) and methacrylic acid (c). The polymerization initiator (d) is introduced after the (meth)acrylic monomer M2 (b) and methacrylic acid (c) and before the mineral filler C (e) and, if present, the release agent (f).

This mixing may be manual of may be performed using a mixer.

In an advantageous embodiment, the mixing is performed under vacuum so as to eliminate the reaction gases, advantageously at a pressure of up to 8000 Pa.

In an advantageous embodiment, the mixing is performed at a temperature ranging from 0 °C to 30 °C, advantageously from 18 °C to 25 °C.

In the case where the coupling agent is formed by the mineral filler C, the functionalization of this filler C is performed prior to its introduction into the (meth)acrylic composition.

Step (2) of hot-molding of the (meth)acrylic composition as obtained at the end of step (1) makes it possible to polymerize the thermoplastic matrix and, in so doing, to obtain the dielectric material.

For obtaining this dielectric material, the hot-molding step (2) can be carried out by any molding technique conventionally used in the field of thermoplastics.

The hot-molding step (2) can advantageously be performed by injection, by automatic pressure gelation process (APG), by casting under vacuum or at atmospheric pressure.

In a preferred embodiment, the hot-molding step (2) is performed by the APG process.

In an advantageous embodiment, the hot-molding step (2) is performed at a temperature T₍₂₎ ranging from 85 °C to 110 °C.

In a preferred embodiment, the hot-molding step (2) is performed under inert gas, such as dinitrogen.

According to an embodiment, the method of the present invention further comprises, between steps (1) and (2), an additional step (1') of mixing the (meth)acrylic composition obtained at the end of step (1) with a coupling agent in an amount of less than 1 part by weight relative to 100 parts by weight of the liquid (meth)acrylic syrup.

This coupling agent may be a compound comprising functional groups such as an organosilane. This coupling agent may notably be chosen from aminosilanes, vinylsilanes, methacrylsilanes and mixtures thereof. Preferably, the coupling agent is chosen from methacrylsilanes.

According to an embodiment, the method of the present invention further comprises, after step (2), a step (3) of post-curing the dielectric material obtained at the end of step (2).

Such a post-curing step (3) makes it possible to improve, if needed, the mechanical properties of the dielectric material as obtained at the end of the hot-molding step (2).

In an advantageous embodiment, the post-curing step (3) is performed at a temperature T₍₃₎ that is at least 10 °C higher than the temperature T₍₂₎ of the hot-molding step (2).

For example, the temperature T₍₃₎ of the post-curing step (3) may advantageously be from 120 °C to 150 °C.

The dielectric material that is manufactured by the method of the present invention may be used in the electronic industry as well as in the electrical industry, whether it is low voltage, medium voltage or high voltage.

It is specified that the expressions "low voltage", "medium voltage" and "high voltage" are used in their usual acceptation, namely
- the expression "low voltage" means a voltage which is strictly less than 1 kV in alternating current (AC) and 1,5 kV in direct current (DC),
- the expression "medium voltage" means a voltage which is greater than or equal to 1 kV AC and 1,5 kV DC but less than or equal to 52 kV AC and 75 kV DC, and
- the expression "high voltage" means a voltage that is strictly greater than 52 kV AC and 75 kV DC.

In the electrical industry, the materials can be used in particular as electrical insulation material for a low, medium or high voltage cut-off device, such as a switch, circuit breaker, switch-fuses set, disconnector, earthing switch disconnector, transformer or contactor.

Other features and advantages of the present invention will become apparent on reading the detailed description which follows and which relates to examples of preparation of (meth)acrylic compositions and dielectric materials and the evaluation of the dielectric and mechanical properties of these dielectric materials, two of which are dielectric materials noted as "in accordance with the present invention" (DM2 and DM3) and one of which is a "comparative" dielectric material (DM1) and which is obtained from a (meth)acrylic composition as disclosed in document [1].

This detailed description is given as an illustration only, and in no case as a limitation.

### DETAILED DESCRIPTION OF PARTICULAR EMBODIMENTS

### 1. Preparation of the dielectric materials

### 1.1. Components used

The components used for the preparation of the various (meth)acrylic compositions are the following:
- as (meth)acrylic polymer P1: a PMMA formed by a copolymer of methyl methacrylate and of ethyl acrylate, sold by the company Altuglas under the name Altuglas^{®} BS 520
- as (meth)acrylic monomer M1: a methyl methacrylate stabilized with hydroquinone monomethyl ether (MEHQ)
- as (meth)acrylic monomer M2: a 1,4-butanediol dimethacrylate (BDDMA) or an ethoxylated bisphenol A dimethacrylate sold by the company Sartomer under the names SR 214 and SR 348, respectively
- as methacrylic monomer M3 as taught in document [1]: a triethylene glycol dimethacrylate (TEGDMA) sold by the company Sartomer under the name SR 205
- methacrylic acid
- as polymerization initiator: a 3,5-diisopropylbenzene hydroperoxide or a *tert*-amyl peroxy-1-methoxycyclohexane sold by the company Arkema under the names Luperox^{®}DH and Luperox^{®}510, respectively
- as filler C1: a ground silica marketed by the company Sibelco under the name E6
- as coupling agent: BYK-C 8000 sold by the company BYK or Geniosil^{®}GF 31 sold by the company Wacker
- as release agent: BYK-P 9912 sold by the company BYK
- as antioxidant: a 3,5-*bis*(1,1-dimethylethyl)-4-hydroxy-,1,1'-(thiodi-2,1-ethanediyl) ester sold by the company BASF under the name Irganox^{®}1035
- as light stabilizer: a *bis*(2,2,6,6-tetramethyl-4-piperidyl) sebacate sold by the company BASF under the name Tinuvin^{®}770DF
- as thermal stabilizing agent: a poly-*tert*-amylphenoldisulfure sold by the company Arkema under the name Vultac-3^{®}
- as colorant: a green colorant sold by the company Marbo Italia under the name ITB Eco Bruno R8016

### 1.2. Preparation of the liquid (meth)acrylic syrup S

The liquid (meth)acrylic syrup S which will be used for the preparation of the various (meth)acrylic compositions is prepared by dissolving 20 parts by weight of the (meth)acrylic polymer P1 in 80 parts by weight of the (meth)acrylic monomer M1.

### 1.3. Preparation of the (meth)acrylic compositions C1 to C3

The (meth)acrylic composition, noted C1, is a comparative composition that is consistent with the teaching of document [1]. This (meth)acrylic composition C1 is prepared by mixing 100 parts by weight of the liquid (meth)acrylic syrup S with:
- 1 part by weight of BDDMA as (meth)acrylic monomer M2,
- 1 part by weight of TEGDMA as (meth)acrylic monomer M3, and
- 0,3 part by weight of coupling agent (BYK-C 8000).

The resulting mixture is then mixed with:
- 2 parts by weight of polymerization initiator (Luperox^{®} DH), and finally
- 163 parts by weight of ground silica (filler C1).

The (meth)acrylic composition, noted C2, is prepared by mixing 100 parts by weight of the liquid (meth)acrylic syrup S with:
- 5 parts by weight of BDDMA as (meth)acrylic monomer M2,
- 5 parts by weight of methacrylic acid,
- 0,3 part by weight of coupling agent (Geniosil^{®}GF 31),
- 0,1 part of light stabilizer (Tinuvin^{®}770DF),
- 0,1 part by weight of antioxidant (Irganox^{®}1035), and
- 0,1 part of thermal stabilizing agent (Vultac-3^{®}).

The resulting mixture is then mixed with:
- 2 parts by weight of polymerization initiator (Luperox^{®}510), and finally
- 163 parts by weight of ground silica (filler C1).

The (meth)acrylic composition, noted C3, is prepared by mixing 100 parts by weight of the liquid (meth)acrylic syrup S with:
- 4 parts by weight of ethoxylated bisphenol A dimethacrylate as (meth)acrylic monomer M2,
- 1 part by weight of methacrylic acid,
- 0,3 part by weight of coupling agent (Geniosil^{®}GF 31),
- 0,1 part of light stabilizer (Tinuvin^{®}770DF),
- 0,1 part by weight of antioxidant (Irganox^{®}1035), and
- 0,1 part of thermal stabilizing agent (Vultac-3^{®}).

The resulting mixture is then successively mixed with:
- 2 parts by weight of polymerization initiator (Luperox^{®}510),
- 1,35 parts by weight of release agent (BYK-P 9912),
- 0,8 part by weight of colorant, and finally
- 163 parts by weight of ground silica (filler C1).

After mixing, the homogenous (meth)acrylic compositions C1 to C3 are put under vacuum for degassing and then injected by the automatic pressure gelation process (APG) under dinitrogen into a mold having an imprint that is compatible with the production of 1B type specimens in accordance with the standard ISO 527-2 (04/2012).

### 1.4. Production of the dielectric materials DM1 to DM3

Polymerization of each of the (meth)acrylic compositions C1 to C3 for obtaining the comparative dielectric material DM1 and the dielectric materials DM2 and DM3 in accordance with the present invention, respectively, is performed by placing the mold:
- at a temperature of 80° C for 15 min for C1, and
- at a temperature of 95° C for 25 min for C2 and C3.

### 2. Evaluation of the mechanical properties of the dielectric materials

The mechanical properties were determined by means of tensile tests performed at 23 °C on the specimens of dielectric materials DM1 and DM3 as obtained in section 1.4. above.

The following mechanical properties were thus determined, in accordance with the standard ISO 527-2 (04/2012):
- the breaking strength, in MPa,
- the Young modulus, in MPa, and
- the elongation at break, in %.

The results of the tensile tests are given in Table 1 below in which the requirements for a reference epoxy-based dielectric material have been reported in the fourth column:

**Table 1**

| Dielectric Material | DM1 | DM3 | Epoxy |
|---|---|---|---|
| Breaking strength (MPa) | 61 | 66,9 | >65 |
| Elongation at break (%) | 0,81 | 0,95 | >1 |
| Young modulus (MPa) | 9831 | 10105 | >9000 |

The results in Table 1 show that the specimens made of the dielectric material DM3 in accordance with the present invention have mechanical properties that are better than those of specimens made of the comparative dielectric material DM1 and at least equivalent to, if not better than, those of specimens made of a reference epoxy-based dielectric material.

### 3. Evaluation of the dielectric properties of the dielectric materials

The specimens as obtained in section 1.4. above were subjected to electrical insulating material characterization tests to determine:
- the dielectric strength, in kV/mm, in accordance with the standard IEC 60243-1:2013,
- the relative permittivity, in accordance with the standard IEC 62631-2-1:2018,
- the dissipation factor (also referred to as the Delta tangent, Tan δ) in accordance with the standard IEC 62631-2-1:2018, and
- the dielectric ageing, the conditions being carried out at 5,6 kV/mm, 115 °C for 1500 h.

The dielectric ageing test is "passed" when no increasing of the current is observed during the test.

The results of the electrical insulating material characterization tests performed at 25 °C (except for the dielectric ageing) are given in Table 2 below in which the requirements for a reference epoxy-based dielectric material have been reported in the fifth column:

**Table 2 (*) not measured**

| Dielectric Material | DM1 | DM2 | DM3 | Epoxy |
|---|---|---|---|---|
| Dielectric strength (kV/mm) | 11 | (*) | 15,3 | ≥12 |
| Relative permittivity | 3,95 | 3,29 | 3,61 | 3,49 |
| Dissipation factor (Tan δ) | 0,032 | 0,041 | 0,037 | 0,0058 |
| Dielectric ageing | (*) | (*) | passed | passed |

The results in Table 2 show that the specimens made of the dielectric materials DM2 and DM3 in accordance with the present invention have dielectric strength and relative permittivity that are comparable to those measured with the reference epoxy-based dielectric material. However, at least the dielectric strength properties of DM3 specimens in accordance with the present invention are clearly better than those of specimens made of the comparative dielectric material DM1.

Tables 1 and 2 read together highlight the fact that the dielectric and mechanical properties measured with the dielectric materials DM2 and especially DM3 in accordance with the present invention, which are obtained from a (meth)acrylic composition whose use is the subject of the present invention, are comparable to those of a reference epoxy-based dielectric material.

### BIBLIOGRAPHY

**[1]** EP 3 587 461 B2
**[2]** US 2006/0251906 A1

## Claims

1. Use of (meth)acrylic composition comprising:
(a) 100 parts by weight of a liquid (meth)acrylic syrup comprising:
(a₁) from 10 % by weight to 50 % by weight of one or more (meth)acrylic polymers P1, and
(a₂) from 50 % by weight to 90 % by weight of one or more (meth)acrylic monomers M1, each monomer M1 comprising only one (meth)acrylic function per monomer and being different from methacrylic acid,
(b) from 0,01 part by weight to 10 parts by weight of one (meth)acrylic monomer M2 comprising at least two (meth)acrylic functions per monomer,
(c) from 0,01 part by weight to 10 parts by weight of methacrylic acid,
(d) from 0,01 part by weight to 5 parts by weight of a polymerization initiator chosen from organic peroxides, and
(e) from 100 parts by weight to 400 parts by weight of a mineral filler C, said mineral filler C comprising at least one filler C1 chosen from the group consisting of metal oxides, carbonates, silicates and glass, preferably chosen from metal oxides,
for manufacturing a dielectric material.

2. The use as claimed in claim 1, wherein each (meth)acrylic polymer P1 is chosen from a methyl methacrylate homopolymer and a methyl methacrylate copolymer, methyl methacrylate representing preferentially at least 50 % by weight of each (meth)acrylic polymer P1.

3. The use as claimed in claim 2, wherein each (meth)acrylic polymer P1 is a copolymer of methyl methacrylate and of an alkyl acrylate in which the alkyl group contains from 1 to 12 carbon atoms, advantageously from 1 to 6 carbon atoms, each (meth)acrylic polymer P1 being preferably chosen from a copolymer of methyl methacrylate and of methyl acrylate and a copolymer of methyl methacrylate and of ethyl acrylate.

4. The use as claimed in any one of claims 1 to 3, wherein each (meth)acrylic monomer M1 is chosen from acrylic acid, alkyl (meth)acrylic monomers and alkylhydroxy (meth)acrylic monomers, the alkyl or hydroxyalkyl group of these (meth)acrylic monomers being linear, branched or cyclic and containing from 1 to 22 carbon atoms, preferentially from 1 to 6 carbon atoms, the (meth)acrylic monomer M1 being preferably methyl methacrylate.

5. The use as claimed in claim 4, wherein methyl methacrylate represents at least 50% by weight of the (meth)acrylic monomers M1.

6. The use as claimed in any one of claims 1 to 5, wherein the (meth)acrylic monomer M2 is chosen from the group consisting of ethylene glycol dimethacrylate, neopentyl glycol dimethacrylate, neopentyl glycol diacrylate, 1,4-butanediol dimethacrylate, 1,4-butanediol diacrylate, 1,3-butylene glycol dimethacrylate, 1,3-butylene glycol diacrylate, triethylene glycol dimethacrylate, triethylene glycol diacrylate, ethoxylated bisphenol A dimethacrylate and ethoxylated bisphenol A diacrylate, the (meth)acrylic monomer M2 being preferably ethoxylated bisphenol A dimethacrylate or ethoxylated bisphenol A diacrylate.

7. The use as claimed in any one of claims 1 to 6, wherein the polymerization initiator is chosen from the group consisting of *tert*-amyl peroxy-1-methoxycyclohexane, 1-methoxy-1-*tert*-butylperoxycyclohexane, 1-methoxy-1-*tert-*amylperoxy-3,3,5-trimethylcyclohexane, 1-methoxy-1-*tert*-butylperoxy-3,3,5-trimethylcyclohexane, 1-ethoxy-1-*tert*-amylperoxycyclohexane, 1-ethoxy-1-*tert*-butylperoxycyclohexane and 1-ethoxy-1-*tert*-butyl-3,3,5-peroxycyclohexane.

8. The use as claimed in any one of claims 1 to 7, wherein the mineral filler C further comprises aluminum trihydrate C2 and/or reinforcements C3, which C3 reinforcements may be chosen from glass fabrics, glass fibers and glass beads.

9. The use as claimed in any one of claims 1 to 8, wherein the (meth)acrylic composition further comprises a coupling agent, which coupling agent is formed either by a compound chosen from aminosilanes, vinylsilanes and methacrylsilanes or by the filler C1 that is functionalized, namely by an aminosilane, vinylsilane or methacrylsilane group and, preferentially, by a methacrylsilane group.

10. The use as claimed in any one of claims 1 to 9, wherein the (meth)acrylic composition further comprises a release agent in an amount of less than 1 part by weight, said release agent being namely chosen from natural oils.

11. Method for manufacturing a dielectric material, said method comprising the steps of:
(1) preparing a (meth)acrylic composition by mixing the following components:
(a) 100 parts by weight of a liquid (meth)acrylic syrup comprising:
(a₁) from 10 % by weight to 50 % by weight of one or more (meth)acrylic polymers P1, and
(a₂) from 50 % by weight to 90 % by weight of one or more (meth)acrylic monomers M1, each monomer M1 comprising only one (meth)acrylic function per monomer and being different from methacrylic acid,
(b) from 0,01 part by weight to 10 parts by weight of one (meth)acrylic monomer M2 comprising at least two (meth)acrylic functions per monomer,
(c) from 0,01 part by weight to 10 parts by weight of methacrylic acid,
(d) from 0,01 part by weight to 5 parts by weight of a polymerization initiator chosen from organic peroxides, and
(e) from 100 parts by weight to 400 parts by weight of a mineral filler C, said mineral filler C comprising at least one filler C1 chosen from the group consisting of metal oxides, carbonates, silicates and glass, preferably chosen from metal oxides, and optionally
(f) less than 1 part by weight of a release agent,
wherein the liquid (meth)acrylic syrup (a) is prepared first and the polymerization initiator (d) is introduced in the liquid (meth)acrylic syrup (a) after the (meth)acrylic monomer M2 (b) and methacrylic acid (c) and before the mineral filler C (e) and, if present, the release agent (f), and
(2) hot-molding the (meth)acrylic composition obtained at the end of step (1), the hot-molding step (2) being advantageously performed by injection, by automatic pressure gelation process (APG), by casting under vacuum or at atmospheric pressure, whereby the dielectric material is obtained.

12. The method as claimed in claim 11, wherein the preparing step (1) is performed under vacuum, advantageously at a pressure of up to 8000 Pa, and/or at a temperature T₍₁₎ ranging from 0 °C to 30 °C, advantageously from 18 °C to 25 °C.

13. The method as claimed in claim 11 or 12, wherein the hot-molding step (2) is performed at a temperature T₍₂₎ ranging from 85 °C to 110 °C and, preferably, under inert gas, such as dinitrogen.

14. The method as claimed in any one of claims 11 to 13, wherein it further comprises, between steps (1) and (2), an additional step (1') of mixing the (meth)acrylic composition obtained at the end of step (1) with a coupling agent in an amount of less than 1 part by weight relative to 100 parts by weight of the liquid (meth)acrylic syrup.

15. The method as claimed in any one of claims 11 to 14, wherein it further comprises, after step (2), a step (3) of post-curing the dielectric material obtained at the end of step (2), the post-curing step (3) being preferably performed at a temperature T₍₃₎ that is at least 10 °C higher than the temperature T₍₂₎ of the hot-molding step (2), this temperature T₍₃₎ being advantageously from 120 °C to 150 °C.

## Patentansprüche

1. Verwendung einer (Meth)acrylzusammensetzung, umfassend:
(a) 100 Gewichtsanteile eines flüssigen (Meth)acrylsirups, umfassend:
(a₁) 10 Gew.-% bis 50 Gew.-% eines oder mehrerer (Meth)acrylpolymere P1, und
(a₂) 50 Gew.-% bis 90 Gew.-% eines oder mehrerer (Meth)acrylmonomere M1, wobei jedes Monomer M1 nur eine (Meth)acrylfunktion pro Monomer umfasst und sich von Methacrylsäure unterscheidet,
(b) 0,01 Gewichtsanteile bis 10 Gewichtsanteile eines (Meth)acrylmonomers M2, das mindestens zwei (Meth)acrylfunktionen pro Monomer umfasst,
c) 0,01 Gewichtsanteile bis 10 Gewichtsanteile Methacrylsäure,
(d) 0,01 Gewichtsanteile bis 5 Gewichtsanteile eines Polymerisationsinitiators, der aus organischen Peroxiden ausgewählt ist, und
(e) 100 Gewichtsanteile bis 400 Gewichtsanteile eines mineralischen Füllstoffs C, wobei der mineralische Füllstoff C mindestens einen Füllstoff C1 umfasst, der aus der Gruppe bestehend aus Metalloxiden, Karbonaten, Silikaten und Glas, vorzugsweise aus Metalloxiden, ausgewählt ist,
zum Herstellen eines dielektrischen Materials.

2. Verwendung nach Anspruch 1, wobei jedes (Meth)acrylpolymer P1 aus einem Methylmethacrylat-Homopolymer und einem Methylmethacrylat-Copolymer ausgewählt ist, wobei Methylmethacrylat vorzugsweise mindestens 50 Gew.-% jedes (Meth)acrylpolymers P1 darstellt.

3. Verwendung nach Anspruch 2, wobei jedes (Meth)acrylpolymer P1 ein Copolymer eines Methylmethacrylats und eines Alkylacrylats ist, in dem die Alkylgruppe 1 bis 12 Kohlenstoffatome, vorteilhafterweise 1 bis 6 Kohlenstoffatome, enthält, wobei jedes (Meth)acrylpolymer P1 vorzugsweise aus einem Copolymer von Methylmethacrylat und von Methylacrylat und einem Copolymer von Methylmethacrylat und von Ethylacrylat ausgewählt ist.

4. Verwendung nach einem der Ansprüche 1 bis 3, wobei jedes (Meth)acrylmonomer M1 aus Acrylsäure, Alkyl(meth)acrylmonomeren und Alkylhydroxy(meth)acrylmonomeren ausgewählt ist, wobei die Alkyl- oder Hydroxyalkylgruppe dieser (Meth)acrylmonomere linear, verzweigt oder zyklisch ist und 1 bis 22 Kohlenstoffatome, vorzugsweise 1 bis 6 Kohlenstoffatome enthält, wobei das (Meth)acrylmonomer M1 vorzugsweise Methylmethacrylat ist.

5. Verwendung nach Anspruch 4, wobei Methylmethacrylat mindestens 50 Gew.-% der (Meth)acrylmonomere M1 darstellt.

6. Verwendung nach einem der Ansprüche 1 bis 5, wobei das (Meth)acrylmonomer M2 aus der Gruppe ausgewählt ist, bestehend aus Ethylenglykoldimethacrylat, Neopentylglykoldimethacrylat, Neopentylglykoldiacrylat, 1,4-Butandiol-Dimethacrylat, 1,4-Butandiol-Diacrylat, 1,3-Butylenglykol-Dimethacrylat, 1,3-Butylenglykol-Diacrylat, TriethylenglykolDimethacrylat, Triethylenglykol-Diacrylat, ethoxyliertem Bisphenol-A-Dimethacrylat und ethoxyliertem Bisphenol-A-Diacrylat, wobei das (Meth)acrylmonomer M2 vorzugsweise ethoxyliertes Bisphenol-A-Dimethacrylat oder ethoxyliertes Bisphenol-A-Diacrylat ist.

7. Verwendung nach einem der Ansprüche 1 bis 6, wobei der Polymerisationsinitiator aus der Gruppe ausgewählt ist, bestehend aus *tert-*Amylperoxy-1-methoxycyclohexan, 1-Methoxy-1-*tert*-butylperoxycyclohexan, 1-Methoxy-1-*tert*-amylperoxy-3,3,5-trimethylcyclohexan, 1-Methoxy-1-*tert-*butylperoxy-3,3,5-trimethylcyclohexan, 1-Ethoxy-1-*tert*-amylperoxycyclohexan, 1-Ethoxy-1-*tert*-butylperoxycyclohexan und 1-Ethoxy-1-*tert*-butyl-3,3,5-peroxycyclohexan.

8. Verwendung nach einem der Ansprüche 1 bis 7, wobei der mineralische Füllstoff C ferner Aluminiumtrihydrat C2 und/oder Verstärkungen C3 umfasst, wobei Verstärkungen C3 aus Glasgeweben, Glasfasern und Glasperlen ausgewählt werden können.

9. Verwendung nach einem der Ansprüche 1 bis 8, wobei die (Meth)acrylzusammensetzung ferner ein Kupplungsmittel umfasst, wobei das Kupplungsmittel entweder aus einer Verbindung gebildet ist, die aus Aminosilanen, Vinylsilanen und Methacrylsilanen ausgewählt ist, oder aus dem Füllstoff C1, der funktionalisiert ist, nämlich durch eine Aminosilan-, Vinylsilan- oder Methacrylsilangruppe und vorzugsweise durch eine Methacrylsilangruppe.

10. Verwendung nach einem der Ansprüche 1 bis 9, wobei die (Meth)acrylzusammensetzung ferner ein Trennmittel in einer Menge von weniger als 1 Gewichtsteil umfasst, wobei das Trennmittel nämlich aus natürlichen Ölen ausgewählt ist.

11. Verfahren zum Herstellen eines dielektrischen Materials, wobei das Verfahren folgende Schritte umfasst:
(1) Vorbereiten einer (Meth)acryl-Zusammensetzung durch Mischen der folgenden Komponenten:
(a) 100 Gewichtsanteile eines flüssigen (Meth)acrylsirups, umfassend:
(a₁) 10 Gew.-% bis 50 Gew.-% eines oder mehrerer (Meth)acrylpolymere P1, und
(a₂) 50 Gew.-% bis 90 Gew.-% eines oder mehrerer (Meth)acrylmonomere M1, wobei jedes Monomer M1 nur eine (Meth)acrylfunktion pro Monomer umfasst und sich von Methacrylsäure unterscheidet,
(b) 0,01 Gewichtsanteile bis 10 Gewichtsanteile eines (Meth)acrylmonomers M2, das mindestens zwei (Meth)acrylfunktionen pro Monomer umfasst,
(c) 0,01 Gewichtsanteile bis 10 Gewichtsanteile Methacrylsäure,
(d) 0,01 Gewichtsanteile bis 5 Gewichtsanteile eines Polymerisationsinitiators, der aus organischen Peroxiden ausgewählt ist, und
(e) 100 Gewichtsanteile bis 400 Gewichtsanteile eines mineralischen Füllstoffs C, wobei der mineralische Füllstoff C mindestens einen Füllstoff C1 umfasst, der aus der Gruppe bestehend aus Metalloxiden, Karbonaten, Silikaten und Glas, vorzugsweise aus Metalloxiden, ausgewählt ist, und wahlweise
(f) weniger als 1 Gewichtsteil eines Trennmittels,
wobei der flüssige (Meth)acrylsirup (a) zuerst vorbereitet wird und der Polymerisationsinitiator (d) in den flüssigen (Meth)acrylsirup (a) nach dem (Meth)acrylmonomer M2 (b) und der Methacrylsäure (c) und vor dem mineralischen Füllstoff C (e) und, falls vorhanden, dem Trennmittel (f) eingebracht wird, und
(2) Warmformen der an dem Ende des Schritts (1) erhaltenen (Meth)acrylzusammensetzung, wobei der Warmformschritt (2) vorteilhafterweise durch Einspritzen, durch ein automatisches Druckgelierungsverfahren (APG), durch Gießen unter Vakuum oder bei Atmosphärendruck durchgeführt wird, wodurch das dielektrische Material erhalten wird.

12. Verfahren nach Anspruch 11, wobei der Vorbereitungsschritt (1) unter Vakuum, vorteilhafterweise bei einem Druck von bis zu 8000 Pa, und/oder bei einer Temperatur T₍₁₎ von 0 °C bis 30 °C, vorteilhafterweise von 18 °C bis 25 °C, durchgeführt wird.

13. Verfahren nach Anspruch 11 oder 12, wobei der Warmformschritt (2) bei einer Temperatur T₍₂₎ von 85 °C bis 110 °C und vorzugsweise unter Inertgas, wie z. B. Stickstoff, durchgeführt wird.

14. Verfahren nach einem der Ansprüche 11 bis 13, wobei es ferner zwischen den Schritten (1) und (2) einen zusätzlichen Schritt (1') des Mischens der an dem Ende des Schritts (1) erhaltenen (Meth)acrylzusammensetzung mit einem Kupplungsmittel in einer Menge von weniger als 1 Gewichtsteil im Verhältnis zu 100 Gewichtsanteilen des flüssigen (Meth)acrylsirups umfasst.

15. Verfahren nach einem der Ansprüche 11 bis 14, wobei es ferner nach Schritt (2) einen Schritt (3) zum Nachhärten des an dem Ende von Schritt (2) erhaltenen dielektrischen Materials umfasst, wobei der Nachhärtungsschritt (3) vorzugsweise bei einer Temperatur T₍₃₎ durchgeführt wird, die mindestens 10 °C höher ist als die Temperatur T₍₂₎ des Warmformschritts (2), wobei diese Temperatur T₍₃₎ vorteilhafterweise von 120 °C bis 150 °C beträgt.

## Revendications

1. Utilisation d'une composition (méth)acrylique comprenant :
(a) 100 parties en poids d'un sirop (méth)acrylique liquide comprenant :
(a₁) de 10 % en poids à 50 % en poids d'un ou de plusieurs polymères (méth)acryliques P1, et
(a₂) de 50 % en poids à 90 % en poids d'un ou de plusieurs monomères (méth)acryliques M1, chaque monomère M1 comprenant une seule fonction (méth)acrylique par monomère et étant différent de l'acide méthacrylique,
(b) de 0,01 partie en poids à 10 parties en poids d'un monomère (méth)acrylique M2 comprenant au moins deux fonctions (méth)acryliques par monomère,
(c) de 0,01 partie en poids à 10 parties en poids d'acide méthacrylique,
(d) de 0,01 partie en poids à 5 parties en poids d'un initiateur de polymérisation choisi parmi les peroxydes organiques, et
(e) de 100 parties en poids à 400 parties en poids d'une charge minérale C, ladite charge minérale C comprenant au moins une charge C1 choisie parmi le groupe consistant en les oxydes métalliques, les carbonates, les silicates et le verre, de préférence choisie parmi les oxydes métalliques,
pour la fabrication d'un matériau diélectrique.

2. Utilisation selon la revendication 1, dans laquelle chaque polymère (méth)acrylique P1 est choisi parmi un homopolymère de méthacrylate de méthyle et un copolymère de méthacrylate de méthyle, le méthacrylate de méthyle représentant préférentiellement au moins 50 % en poids de chaque polymère (méth)acrylique P1.

3. Utilisation selon la revendication 2, dans laquelle chaque polymère (méth)acrylique P1 est un copolymère de méthacrylate de méthyle et d'un acrylate d'alkyle dans lequel le groupe alkyle contient de 1 à 12 atomes de carbone, avantageusement de 1 à 6 atomes de carbone, chaque polymère (méth)acrylique P1 étant de préférence choisi parmi un copolymère de méthacrylate de méthyle et d'acrylate de méthyle et un copolymère de méthacrylate de méthyle et d'acrylate d'éthyle.

4. Utilisation selon l'une quelconque des revendications 1 à 3, dans laquelle chaque monomère (méth)acrylique M1 est choisi parmi l'acide acrylique, les monomères (méth)acryliques d'alkyle et les monomères (méth)acryliques d'hydroxyalkyle, le groupe alkyle ou hydroxyalkyle de ces monomères (méth)acryliques étant linéaire, ramifié ou cyclique et contenant de 1 à 22 atomes de carbone, préférentiellement de 1 à 6 atomes de carbone, le monomère (méth)acrylique M1 étant de préférence le méthacrylate de méthyle.

5. Utilisation selon la revendication 4, dans laquelle le méthacrylate de méthyle représente au moins 50 % en poids des monomères (méth)acryliques M1.

6. Utilisation selon l'une quelconque des revendications 1 à 5, dans laquelle le monomère (méth)acrylique M2 est choisi parmi le groupe consistant en diméthacrylate d'éthylène glycol, diméthacrylate de néopentyl glycol, diacrylate de néopentyl glycol, diméthacrylate de 1,4-butanediol, diacrylate de 1,4-butanediol, diméthacrylate de 1,3-butylène glycol, diacrylate de 1,3-butylène glycol, diméthacrylate de triéthylène glycol, diacrylate de triéthylène glycol, diméthacrylate de bisphénol A éthoxylé et diacrylate de bisphénol A éthoxylé, le monomère (méth)acrylique M2 étant de préférence le diméthacrylate de bisphénol A éthoxylé ou le diacrylate de bisphénol A éthoxylé.

7. Utilisation selon l'une quelconque des revendications 1 à 6, dans laquelle l'initiateur de polymérisation est choisi parmi le groupe consistant en tert-amyl-peroxy-1-méthoxycyclohexane, 1-méthoxy-1-tert-butylperoxycyclohexane, 1-méthoxy-1-*tert*-amylperoxy-3,3,5-triméthylcyclohexane, 1-méthoxy-1-*tert-*butylperoxy-3,3,5-triméthylcyclohexane, 1-éthoxy-1-*tert*-amylperoxycyclohexane, 1-éthoxy-1-*tert*-butylperoxycyclohexane et 1-éthoxy-1-*tert*-butyl-3,3,5-peroxycyclohexane.

8. Utilisation selon l'une quelconque des revendications 1 à 7, dans laquelle la charge minérale C comporte en outre du trihydrate d'aluminium C2 et/ou des renforts C3, lesquels renforts C3 peuvent être choisis parmi les toiles de verre, les fibres de verre et les billes de verre.

9. Utilisation selon l'une quelconque des revendications 1 à 8, dans laquelle la composition (méth)acrylique comporte en outre un agent de couplage, lequel agent de couplage est formé soit par un composé choisi parmi les aminosilanes, les vinylsilanes et les méthacrylsilanes, soit par la charge C1 qui est fonctionnalisée, notamment par un groupe aminosilane, vinylsilane ou méthacrylsilane et, préférentiellement, par un groupe méthacrylsilane.

10. Utilisation selon l'une quelconque des revendications 1 à 9, dans laquelle la composition (méth)acrylique comporte en outre un agent de démoulage en une quantité de moins de 1 partie en poids, ledit agent de démoulage étant notamment choisi parmi les huiles naturelles.

11. Procédé de fabrication d'un matériau diélectrique, ledit procédé comprenant les étapes de :
(1) la préparation d'une composition (méth)acrylique par le mélange des constituants suivants :
(a) 100 parties en poids d'un sirop (méth)acrylique liquide comprenant :
(a₁) de 10 % en poids à 50 % en poids d'un ou de plusieurs polymères (méth)acryliques P1, et
(a₂) de 50 % en poids à 90 % en poids d'un ou de plusieurs monomères (méth)acryliques M1, chaque monomère M1 comprenant une seule fonction (méth)acrylique par monomère et étant différent de l'acide méthacrylique,
(b) de 0,01 partie en poids à 10 parties en poids d'un monomère (méth)acrylique M2 comprenant au moins deux fonctions (méth)acryliques par monomère,
(c) de 0,01 partie en poids à 10 parties en poids d'acide méthacrylique,
(d) de 0,01 partie en poids à 5 parties en poids d'un initiateur de polymérisation choisi parmi les peroxydes organiques, et
(e) de 100 parties en poids à 400 parties en poids d'une charge minérale C, ladite charge minérale C comprenant au moins une charge C1 choisie parmi le groupe consistant en les oxydes métalliques, les carbonates, les silicates et le verre, de préférence choisie parmi les oxydes métalliques, et facultativement
(f) moins de 1 partie en poids d'un agent de démoulage,
dans lequel le sirop (méth)acrylique liquide (a) est d'abord préparé et l'initiateur de polymérisation (d) est introduit dans le sirop (méth)acrylique liquide (a) après le monomère (méth)acrylique M2 (b) et l'acide méthacrylique (c) et avant la charge minérale C (e) et, le cas échéant, l'agent de démoulage (f), et
(2) le moulage à chaud de la composition (méth)acrylique obtenue à la fin de l'étape (1), l'étape de moulage à chaud (2) étant avantageusement réalisée par injection, par un processus de gélification sous pression automatique (APG), par coulée sous vide ou à pression atmosphérique, moyennant quoi le matériau diélectrique est obtenu.

12. Procédé selon la revendication 11, dans lequel l'étape de préparation (1) est réalisée sous vide, avantageusement à une pression allant jusqu'à 8 000 Pa, et/ou à une température T₍₁₎ allant de 0 °C à 30 °C, avantageusement de 18 °C à 25 °C.

13. Procédé selon la revendication 11 ou 12, dans lequel l'étape de moulage à chaud (2) est réalisée à une température T₍₂₎ allant de 85 °C à 110 °C et, de préférence, sous gaz inerte, tel que le diazote.

14. Procédé selon l'une quelconque des revendications 11 à 13, dans lequel il comporte en outre, entre les étapes (1) et (2), une étape supplémentaire (1') de mélange de la composition (méth)acrylique obtenue à la fin de l'étape (1) avec un agent de couplage dans une quantité de moins de 1 partie en poids par rapport à 100 parties en poids du sirop (méth)acrylique liquide.

15. Procédé selon l'une quelconque des revendications 11 à 14, dans lequel il comporte en outre, après l'étape (2), une étape (3) de post-durcissement du matériau diélectrique obtenu à la fin de l'étape (2), l'étape de post-durcissement (3) étant de préférence réalisée à une température T₍₃₎ qui est au moins 10 °C plus élevée que la température T₍₂₎ de l'étape de moulage à chaud (2), cette température T₍₃₎ étant avantageusement de 120 °C à 150 °C.
